(19) Europäisches Patentamt
European Patent Office
Office européen des brevets

(11) **EP 1 990 083 A1**

(12) **EUROPEAN PATENT APPLICATION**

(43) Date of publication:
**12.11.2008 Bulletin 2008/46**

(51) Int Cl.:
**B01D 53/94** (2006.01)    **B01J 23/89** (2006.01)
**B01J 35/04** (2006.01)    **B01J 37/02** (2006.01)

(21) Application number: **08103427.4**

(22) Date of filing: **08.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **11.05.2007 EP 07108033**

(71) Applicant: **Ford Global Technologies, LLC Dearborn, MI 48126 (US)**

(72) Inventors:
• **Carberry, Brendan**
  **52074 Aachen (DE)**
• **Chigapov, Albert**
  **52072 Aachen (DE)**
• **Dubkov, Alexei**
  **52072 Aachen (DE)**
• **Harmsen, Jan**
  **6369 BX Simpelveld (NL)**
• **Ukropec, Robert**
  **52072 Aachen (DE)**

(74) Representative: **Drömer, Hans-Carsten Ford-Werke Aktiengesellschaft, Patentabteilung NH/DRP, Henry-Ford-Strasse 1 50725 Köln (DE)**

(54) **PGM-free DPF catalyst for soot oxidation**

(57) The invention refers to a catalyst material for assisting carbon-containing particulate matter combustion. The catalyst material is essentially free of platinum group metal compounds and consists essentially of a Copper-oxide and a silver metal component and has a silver to copper oxide ratio in weight from 1:5 to 3:1. This catalytic composition is allowing decreasing $NO_2$ emissions and higher maximal soot loadings during regeneration of catalyzed DPF while showing comparable or even better activity in soot oxidation regarding reference state-of-the-art CDPFs based on Pt-group metals. The new catalysts revealed high stability against deactivation during the most severe regenerations.

Fig. 2

EP 1 990 083 A1

**Description**

The present invention refers to a catalyst for assisting solid particulate matter (soot) combustion, basically for the catalytic coating of a Diesel particulate filter (DPF).

The invention can be used advantageously in an exhaust gas aftertreatment system of a motor vehicle, basically for reducing the soot and nitrogen dioxide ($NO_2$) emissions from a diesel engine. The invention is, however, not limited to that use but can be generally employed for the exhaust gas aftertreatment, the exhaust gases being the outcome of the combustion of carbon containing fuels.

Increased $NO_2$ emissions during DPF regeneration are one of the potential issues for Diesel particulate filter technology. Presently, the most promising method for removing soot from engine exhaust is by collecting the soot using a diesel particulate filter ("DPF") followed by oxidation of the accumulated particulates at elevated temperatures.

Generally, soot can be oxidized using nitrogen dioxide presented in automotive exhaust or by oxygen from intake air.

$$C + O_2 \rightarrow CO, CO_2$$

$$C + NO_2 \rightarrow CO + NO$$

Oxidation of soot by $NO_2$ is typically occurring at 350-450 °C, at higher temperatures the contribution of this reaction is low due to the shift of thermodynamic equilibrium $2 NO + O_2 \leftrightarrow 2 NO_2$ to NO side.

Oxidation by oxygen is more difficult and requires higher temperatures of about 550-650°C. Oxidation by $NO_2$ is proceeding easier but is limited by the available amount of $NO_2$.

Diesel particulate filters have been installed in urban buses as early as in 1986. Johnson Matthey ("JM") is producing commercially Pt-containing catalysts for a DPF-system called "Continuously Regenerating Trap" ("CRT™"). The Continuously Regenerating Trap comprises a Diesel particulate filter for soot oxidation and a platinum-based Diesel oxidation catalyst ("DOC") positioned upstream of the Diesel particulate filter to use $NO_2$ generated on the Pt-containing DOC for soot oxidation (Platinum Metals Review, 45(1), 2001, 30).

Unfortunately, for Diesel passenger cars the amount of $NO_x$ emitted is not enough to provide complete soot oxidation due to lower $NO_x$/soot ratio in contrast to trucks, buses and commercial vehicles. In addition, the temperatures are typically lower for passenger cars. Due to these reasons, the only viable solution at the moment is periodical high-temperature regeneration using oxygen from the intake air to oxidize soot at more elevated temperatures.

More recently, PSA launched a first European diesel passenger car having a particulate filter system. This solution is provided by fuel-borne catalytic assistance in the regeneration of the DPF, but requires additional components for additive dosing and refilling the additive fuel tank. Moreover, fuel-borne catalysts lead to the formation of ash accumulated on the filter with gradual loss of filter soot capacity and a decrease in time between regeneration events.

Another catalytic solution is to deposit catalytic material (catalyst) right on the walls of a particulate filter, so-called "Catalyzed DPF" (CDPF). A catalyzed soot filter which includes one or more catalytic materials is more attractive because it is potentially a less complex way to solve the problem of soot oxidation. In this case however, the contact between catalyst and soot is less effective and it is more difficult to oxidize soot and typically requires higher temperatures. There are many problems and quite strict requirements for catalyst for such regenerations. As peak temperatures during regenerations may exceed 1000-1200°C, the catalyst should withstand such temperatures whereas such temperatures are a problem for noble metal catalysts, because of the intensive sintering of noble metals at temperatures above 750-800°C.

Presently available catalyst-containing filters use PGM compositions, particularly platinum based formulations on different oxides (Oi-Uchisava J., Obuchi A., Enomoto R. Liu s., Nanba T. and Kushiyama S, Appl.Catal., B 2000, 26 (1), 17-24; Oi-Uchisava J., Obuchi A., Ogata A., Enomoto R. and Kushiyama S., Appl.Catal.B 1999, 21 (1), 9-17; JP 11253757). Such Pt-containing compositions, as described in WO 00/29726 and EP 0 160 482, are producing $NO_2$ by NO-oxidation on Pt-containing sites. In the case of DPF and ADPF systems, the level of $NO_2$ concentration is typically lower relative to $NO_2$ level after Diesel oxidation catalyst (DOC) due to the reaction:

$$C + NO_2 \rightarrow CO + NO$$

In comparison to that, the regeneration of CDPF systems leads to the opposite effect, namely increased $NO_2$ emissions, due to the additional $NO_2$ production on Pt-or Platinum-group containing CDPFs. In addition to that, such catalytic coatings are very expensive due to the high content of Platinum-group metals (PGM).

Furthermore, PGM coatings are highly active in undesirable reactions such as oxidation of $SO_2$ to $SO_3$, with the following formation of sulphated ash and sulphated particulate. To minimize this side effect, catalyst suppliers try to decrease the PGM concentration in the coatings. This, however, leads to significantly lower activities in soot oxidation and thus decreased efficiency. In addition, PGM-containing wash-coats/coatings are vulnerable to be poisoned by sulphur compounds, particularly in the case of low Pt- or Pd- loading, respectively.

The object of the invention is to find a new catalyst material for soot oxidation especially for Diesel engine cars, whereby the catalyst does not contain platinum group metals, but having comparable activity to Platinum-based systems but higher selectivity to soot particle combustion and thus leading to reduced amounts of undesirable side reaction products, especially $NO_2$, during the regeneration of the catalyst.

The solution was found in an application of a catalytically active composition which is essentially free of platinum group metals, based on a mixture of silver metal component and copper oxide.

A first embodiment of the invention is a catalyst material for assisting carbon-containing particulate matter combustion which is essentially free of platinum group metal compounds consisting essentially of a copper oxide and silver whereas the silver to copper oxide ratio in weight is from 1:5 to 3:1.

The new designed catalysts provide decreased $NO_2$ emissions for catalyzed DPF technology (CDPF) even below a level found for DPF and ADPF technologies, while still providing the same good activity in soot combustion. Additionally, the new catalysts of this invention are economically more attractive compared to those based on Pt-group metals due to the lower price of the incorporated materials. The catalysts according to this invention can be used for assisting carbon-containing particulate matter combustion, especially of diesel engine exhaust gases, specifically of cars.

The catalyst material according to the current invention is essentially free of platinum group metal compounds. The term essentially free of platinum group metal compounds is to be understood with respect to the current invention that the catalyst material contains less than 5 weight-% of platinum group metal compounds, preferably less than 2 weight-%, more preferably less than 1 weight-%, most preferably less than 0,1 or even 0,01 weight-%.

The catalyst material according to the current invention show excellent catalytic activity and selectivity while offering the possibility to reduce costs of catalyst material drastically in comparison to Pt-based catalysts. The catalyst material, i.e. the catalyst after a calcination process - consists besides the catalyst carrier material essentially of Ag and Copper-oxide. Catalysts of that composition are highly efficient and do not contain considerable amounts of further substances, especially no additional metals except Ag and Cu. Those catalysts according to the current invention which consist essentially of Ag and Copper-oxide do not contain more than 5 weight-% of another component, especially another metal or metal oxide, preferably less than 2 weight-%, more preferably less than 1 weight-%, most preferably less than 0,1 or 0,01 weight-%. It is also possible that the catalyst material according to the current invention consist of Ag and Copper-oxide without any further metal or metal oxide components.

The high efficiency with respect to soot combustion is also due to the silver to copper oxide ratio which is in weight from 1:5 to 3:1.

Other features of the invention are to be found in the following description and the appending claims. The invention is described hereinafter by means of preferred embodiments with reference to the accompanying figures in which:

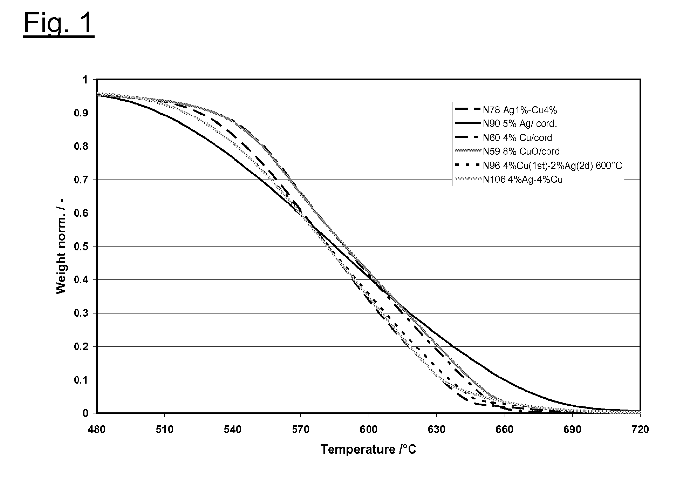

Figure 1     shows the Temperature ramp up to 800°C over different silver, copper oxide and Ag-CuO catalysts, temperature ramp 9°C/min; soot FW2;

Figure 2     shows the regeneration efficiency evaluated based on backpressure recovery for DTIR regenerations for DPFs made from SiC for present invention DPF((cdpf70-00), reference Pt-containing samples with 40g/ft3 Pt loading and bare (uncoated)DPF;

Figure 3     shows the regeneration efficiency evaluated based on backpressure recovery for DTIR regenerations for DPFs made from cordierite for present invention DPF((cdpf68-0), reference Pt-containing samples with 10 and 20g/ft$^3$ Pt loading and bare (uncoated) DPF;

Figure 4     shows the regeneration efficiency evaluated based on soot mass method for DTIR regenerations for DPFs made from SiC for present invention DPF((cdpf70-00), reference Pt-containing samples with 40g/ft$^3$ Pt loading and bare (uncoated )DPF;

Figure 5     shows the regeneration efficiency evaluated based on soot mass method for DTIR regenerations for DPFs made from cordierite for present invention DPF((cdpf68-0), reference Pt-containing samples with 10 and 20g/ft$^3$ Pt loading and bare (uncoated)DPF;

Figure 6     shows the balance point temperature for DPFs made from SiC for present invention DPF (cdpf70-00), reference Pt-containing samples with 40g/ft3 Pt loading and bare (uncoated) DPF;

Figure 7     shows the CO selectivity for catalyzed DPFs and bare DPF;

Figure 8        shows the maximum peak temperatures recorded during regeneration for bare filter, Ag-CuO catalyst of present invention (cdpf-70-00) for DPFs prepared on SiC;

Figure 9        shows the maximum peak temperatures recorded during regeneration for bare filter, Ag-CuO catalyst of present invention (cdpf-68-0) for DPFs prepared on Cordierite;

Figure 10      shows the initial backpressure for catalyzed DPFs prepared on cordierite and bare filter; and

Figure 11      shows the average amount of $NO_2$ produced during regenerations for bare DPF, reference Pt-containing DPFs (Example 1) and Ag-CuO catalyst of present invention;

In a preferred embodiment a catalyst according to the current invention contains silver and copper oxide with a silver loading of 1-5 weight % and a copper oxide loading of 1-8% related to the filter weight.

The silver to copper oxide weight ratio of the catalyst according to the current invention is in the range of 1:5 to 3:1. This ensures high efficiency with respect to soot combustion. Even higher efficiency with respect to soot combustion can be achieved with silver to copper oxide weight ratios from 1:3 to 2:1, even more preferred about 1:2. It has been found that catalysts with such molar ratios show good activity and selectivity to soot combustion if used as impregnation for DPFs. Low loadings are preferable to decrease costs. To further decrease costs, the silver can be loaded only in the front zone of the filter to initiate soot combustion. No preliminary coating of the filter with alumina or other high surface area coating material is required in contrast to commercial PGM- containing filters.

Catalyst material according to the current invention shows excellent catalytic activity and selectivity while offering the possibility to reduce costs of catalyst material drastically in comparison to Pt-based catalysts.

The invention further concerns a catalyst for assisting carbon-containing particulate matter combustion consisting essentially of a copper oxide and silver which can be prepared by a process comprising the steps of first impregnating the surface of a carrier material with an aqueous solution of a copper salt followed by drying and in a second step impregnating the copper salt impregnated carrier material with an aqueous solution of a silver salt followed by drying and final calcinations at a temperature > 700°C, preferably at a temperature ≥ 900 °C. As carrier material for the catalysts of the current invention every material known to a person skilled in the art can be used which is suitable for particulate filters, especially diesel particulate filters. Materials like silicon carbide (SiC) or cordierite are preferred examples. Drying can be performed at room temperature but also at elevated temperatures, as 100°C or 120°C for example. Thus prepared catalysts are essentially free of Pt-group metals. Catalysts prepared by such a two step impregnation showed highest soot conversion rates while keeping the total silver amount as low as possible, thus reducing the costs. Table 1 illustrates the improvement achieved by such a two step impregnation with silver used as second surface treatment. The example "2%Ag-4%CuO", i.e. a mixture of Ag and CuO-precursors in a single impregnation step on Cordierite shows 66.7 % soot conversion below 600 °C, whereas a catalyst of"4%CuO 1st+2% Ag 2nd" on Cordierite, i.e. silver impregnation on an already existing Cu-salt layer leads to a conversion rate of 75.7 %. It is even further preferred when the silver salt containing solution also contains a copper salt.

It is further preferred when the catalysts according to this invention are prepared on a carrier material which is not coated with a high-surface-area refractory material, like alumina for example. The current invention works also on such pre-treated carrier materials, but it was found that soot combustion rate can even be increased by covering the filter material directly with the catalyst material without a pretreatment like washcoating the carrier with alumina sol for example. This is quite surprising as the pre-treated surface reveals a higher surface area which usually increases the number of possible reaction sites and thus conversion rate of a catalyst. That is why Pt-based DPF-catalysts are usually impregnated on carrier materials with an alumina washcoat.

The invention further concerns the use of a catalyst according to this invention for the catalytic coating of a Diesel particulate filter to provide effective filter regeneration, low $NO_2$ emissions and high thermal stability against deactivation.

The invention further concerns a particulate filter for filtering out solid particles present in the exhaust gases of an internal combustion engine, comprising a catalyst according to this invention.

It is further preferred if 5 to 50%, preferably 10 to 30%, of the active surface of a particulate filter according to this invention contains a catalyst according to this invention and that the active surface of the filter contains at least one further catalyst for filtering out solid particles present in the exhaust gases of an internal combustion engine. Active surface of a catalyst is understood to be that area which is involved in a soot combustion process. The further catalyst can be only CuO for example. It is especially preferred for a particulate filter, when the catalyst according to this invention is located in the front zone of the inlet channels, especially in the first half, preferably the first one-third, more preferably the first one-forth, mostly preferred the first one-fifth of the front zone of the inlet channels. This is especially preferred as soot combustion is initiated directly at the inlet by the high active catalyst according to this invention. The rest of the filter surface is covered for example with CuO only which is sufficiently active to propagate soot combustion. With such a two phase catalyst, soot combustion is very effective with only a small amount of expensive catalyst material like Ag for example.

Details of catalysts preparation are given below, and examples illustrating the effect of applying the novel catalytic formulations of current invention are given in Examples 2a and 2b and Table 1.

The DPFs were prepared according to the present invention and were tested/ evaluated under real conditions on engine dynamometer using active strategy to provide filter regeneration and analytical methods to measure emissions. These filters were compared with blank uncoated DPF and commercial catalyzed DPFs available with PGM loading.

Preparation of the catalysts according to invention

Filter substrate material, such as a porous silicon carbide (SiC) or cordierite, has been finely grinded and fraction 60-70 mesh was sieved. This powder was preliminary washcoated with alumina using 20 wt.% alumina sol from Alfa Aesar followed by drying and calcinations at 750 °C. For comparison reasons alumina coated powder and non-coated powders were prepared. These powders were then impregnated with solution containing catalyst precursors, for example silver and copper nitrate using so-called "wetness impregnation" method without excess of liquid using measured water absorption capacity of filter or powder prepared from filter material.

Preparation of catalyzed Diesel Particulate Filters (CDPFs) acc. to this invention

Example 1, Reference sample:

Commercial prototypes having Pt loading 40g/ft$^3$ ($\approx$ 1.412 g/l) and prepared on DPFs made from SiC having the same size, cell density and porosity and practically the same initial weight were in service for comparison purposes .The prototypes having Pt loading 10g/ft$^3$ ($\approx$ 0.353 g/l) and 20g/ft$^3$ ($\approx$ 0.706 g/l) which were prepared on DPFs made from robust cordierite having the same size, cell density and porosity and practically the same initial weight were in service for comparison purpose. Bare (uncoated) DPFs having the same filter parameters were also in service for comparison purposes.

Example 2, invention

Available diesel particulate filter substrates (DPFs) made from SiC (silicon carbide, 200 cpsi) or cordierite and having 5.66 x 6" size were used for catalytic coating. The solution containing catalyst precursors was applied to DPFs followed by final calcinations again providing "incipient wetness impregnation" without any excess of liquid. For silver saving, only inlet channels for ¼ length of the filter were impregnated with silver-containing solution. Below are descriptions of DPFs preparations.

Example 2a, CDPF #68 (Ag-CuO on cordierite)

A Cordierite filter (m=1486g) was impregnated with solution containing 87.8g of copper (II) nitrate and 83 g of citric acid in 450ml of distilled water. The sample was then dried at 100°C. After drying, the inlet channels of DPF were repeatedly impregnated with the solution containing 15.9g of silver nitrate and 14.8g of copper (II) nitrate, 33 g of citric acid and 100 ml of distilled water. Silver loading was 10g per filter. The CDPF was dried at 100°C and finally calcined at 900°C for 8h; the final weight was 1535g.

Example 2b, CDPF #70 (Ag-CuO$_x$ on silicon carbide SiC)

SiC filter (initial weight 1967g) was coated with 47.9 g of copper nitrate and 44 g of citric acid in 283 ml distilled water with the following drying at 100°C. Then the inlet channels of filter were impregnated with the following solution: 12.6 g of silver nitrate, 6.5 g of copper nitrate and 12.0 g of citric acid in 70 ml of distilled water. Ag loading was 8.0g. Finally, DPF was again dried at 100°C and then calcined at 900°C for 8h. DPF final weight was measured as 2000g.

TG-MS characterization

The catalysts were characterized with TG-MS method using a Hiden IGA-003 analyser. According to the procedure selected, 240 mg of catalyst (the catalyst was loaded on powder grinded and sieved from Ibiden SiC substrate or Corning cordierite) and 40 mg of real diesel soot were used. For some experiments also FW2 soot from Degussa was used which has very close properties to diesel soot. Prior to the experiments, the catalyst and soot were mixed in a mortar with a spatula that provides loose contact between catalyst and soot. Samples were heated in the reaction gas

($8\%O_2$-He; flow rate 100 cc/min) to reach 600°C with temperature ramp of 9°C/min and then kept at 600°C until complete soot combustion and than cooled down. This procedure simulates the process of filter regeneration under real conditions. During the experiment, sample temperature and weight were recorded; the gas leaving the reactor was analyzed for $CO/N_2$, $H_2O$, $O_2$ and $CO_2$ using quadruple MS Hiden HPR-20. The indicated sample temperature was measured by thermocouple placed at ca. 1 cm distance from the crucible with loaded soot and catalyst.

Engine evaluation of DPF regeneration properties

The experimental and testing procedures for evaluation under real engine conditions are given below. First step was to clean all filters and to load them with a definitive amount of soot with the following regeneration using the so-called drop-to-idle method, than the filters were loaded again with a higher amount of soot. Typically a soot load of 2g/l of the DPF volume or more was reached and regenerated followed by increasing again the soot loading to 2g/l or more. Drop-to-idle method means that after initiation of regeneration determined by backpressure (decrease of backpressure) engine was switched off to idle, that leads to high oxygen and low flow conditions thus facilitating soot combustion. Consequently, it leads to a huge heat release and maximal peak temperatures during regeneration, so this type of testing is the most severe way to prove catalyst and filter durability. Sometimes ramp regeneration was also in service to prove catalyst activity in low-temperature $NO_2$ assisted regeneration, creating high $NO_2$ level due to closed EGR-valve and high load.

Regeneration efficiency (amount of soot combustion) was evaluated using two methods. Regeneration efficiency was calculated as percentage of soot combusted within DPF during regeneration to initial soot loading. This amount was determined from weight difference for the DPF before and after regeneration. Soot loading (g) was also determined as the weight difference of the DPF before and after soot loading.

Another evaluation is based on recovery of backpressure after regeneration. As the result of soot combustion, backpressure (resistance to flow) becomes lower and in the cases of effective regeneration go to the initial level which could be seen before the soot loading.

$NO_2$ emissions during regenerations were calculated as follows:

$$NO_2 \text{ make} = \text{Average } \{\text{Average }_{(within\ 1\ test)} [NO_2 \text{ on DPF outlet (g/s)}/ NO_2 \text{ on DPF inlet (g/s)]}\}$$

Filter testing:

The samples produced in accordance with the invention as well as reference (commercial) samples produced in accordance with the state of the art were investigated with a 2.0 litre common rail turbo Diesel engine on steady-state dynamometer. Engine was connected via flexible connection with Diesel oxidation catalyst (DOC) upstream of close-coupled DPF. The following sequence of test procedures was applied:

1. Test procedures

1.1 High temperature cleaning of the filter at a temperature of 610°C $\pm$ 10°C for 30 min with post-injection at a predetermined engine speed/load.

1.2 Pressure drop characterisation and weighing of the filter (with a tolerance of $\pm$ 0.1 g) under warm conditions.

1.3 Soot loading at a predetermined speed/load to a predetermined loading limit.

1.4 Pressure drop characterisation and weighing of the filter (with a tolerance of $\pm$ 0.1 g) under warm conditions.

1.5 Regeneration in accordance with DTI regeneration (see procedure 2) or ramp regeneration (see procedure 3).

1.6 Pressure drop characterisation and weighing of the filter (with a tolerance of $\pm$ 0.1 g) in the warm condition.

This procedure was then repeated but using near 2g/l higher soot loading up to 10-12g/l. Temperatures inside DPF during regeneration were recorded using 16 thermocouples inserted in DPF channels.

Under tests conditions, a degree of the pressure drop recovery and soot mass oxidized during regeneration were calculated from weight difference and were adequate indicators of the regeneration performance. Regeneration efficiency will be further used for comparison between standard CDPF systems and new formulations for catalyzed DPFs claimed in the present invention.

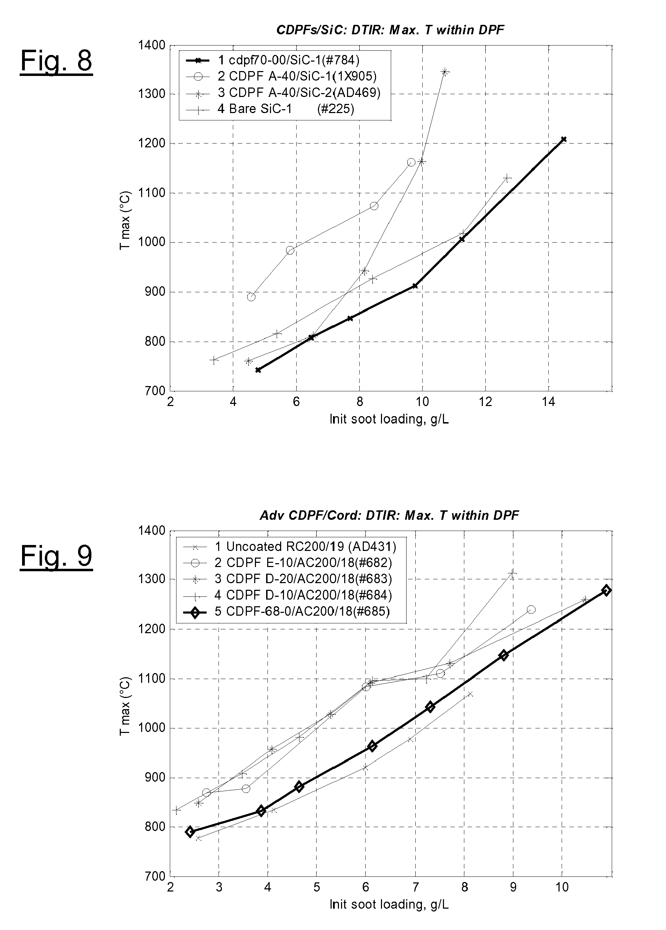

The maximal temperatures inside of the tested DPFs are shown in Figure 8 and 9, sometimes temperatures were reaching 1100 -1200°C during regeneration events at highest soot loadings.

Regeneration

Two different types of regeneration were applied: DTIR (DTIR = 'drop-to-idle regeneration'), which means that after initiation of regeneration determined by decrease of backpressure the engine was switched to idling conditions. That represents the worst case scenario for regeneration with the highest possible peak temperatures during regeneration. The second regeneration type used was ramp regeneration.

DTI-regeneration was performed as follows:

2. DTIR:

2.1 Shifting to a predetermined engine speed/load and stabilizing of the exhaust gas temperature.

2.2 Starting post-injection with an increase in the through-flow parameter (mg/stroke) from zero to maximum within a predetermined time interval with the target of achieving a temperature of 610°C $\pm$ 10°C at the filter inlet.

2.3 Maintaining a maximum post-injection amount, while a temperature of 610°C $\pm$ 10°C at the filter inlet is maintained till moment X.

2.4 Moment X: dropping the engine to idle (mass flow rate about 30 kg/h); cutting post-injection with recording of data at 1s intervals until the temperature downstream of the DPF reaches 200°C. Moment X is defined as the first data point at which the pressure difference across the DPF has remained constant or started to decrease (dP(X-n) >...>dP(X-1)>dP(X)).

Ramp regeneration was performed as follows:

3. Ramp regeneration:

3.1 Engine is switched to a predetermined Speed/Load, thus stabilizing exhaust temperatures at low engine load with 1600 rpm and a torque of 20 Nm.

3.2 Starting from that engine speed the ramp was performed with an increase of 6 Nm/min from 20 to 250 Nm increasing the exhaust temperatures from 140 to approx. 460°C. EGR-valve (exhaust gas recirculation-valve) was switched off.

3.3 During this regeneration, $NO_x$-concentration increased from 250 ppm to 1100 ppm and oxygen content ($O_2$) decreased from 16% to 3%. Temperature increase during ramp regeneration is near 8 °C/min.

While for DTI type of regeneration, oxygen is a basic oxidant for soot, for the ramp regeneration the contribution of $NO_2$- assisted regeneration is significant:

$$C + O_2 \rightarrow CO, CO_2$$

$$C + NO_2 \rightarrow CO + NO$$

Results

First, single metal oxides were tested for their activity in soot oxidation using oxygen as an oxidant under loose contact conditions as described above using Hiden TG-MS. The results are presented in Table 1. The activity of catalysts were evaluated by several values:

1) At the temperature needed to reach 25% soot conversion ($T_{25}$), displaying activity at low temperatures.

2) Soot conversion percentage upon reaching 600 °C.

3) Time to reach to 50% soot-conversion at 600 °C.

4) Time to reach to 90% soot-conversion at 600 °C.

Among pure metals/metal oxides tested, only copper oxide, chromium oxide and silver did show some noticeable activity, as presented in Table 1. Other metal oxides, including transient metal oxides, revealed no or little activity. Silver and chromium showed higher activity at low temperatures than copper oxide, whereas activity of copper oxide was comparable to that of silver at 600 °C and better than chromium. As chromium is toxic and silver is more expensive, focus was laid basically on copper-containing catalysts. However, no further increase of activity could be achieved by adding additional components to copper using alumina-washcoated samples.

Good catalytic activity was obtained for high copper loading, whereas lower loading significantly decreased activity, possibly due to spinel formation with alumina from the washcoat. Temperature of preliminary calcination was very high - at 850°C - and thus higher than the temperature of spinel formation, but it was also taken into account the possibility of high temperature peaks during DPF regeneration and the provision to achieve stable activity at such high temperatures.

Surprisingly, the activity of a copper-containing catalyst could be significantly increased when copper oxide was deposited directly on silicon carbide powder without preliminary washcoating with alumina. All commercial samples were made with preliminary alumina washcoating, which is why such a result was unexpected. A possible explanation for this observation could be that the need of such washcoating and a much higher surface area of the catalyst is questionable, because the catalyst material presented on a flat surface has a good chance to come into contact with soot, whilst catalyst material deposited in fine pores, which are not accessible for bigger soot particles, has no contact at all with soot. Accordingly, to fill all surfaces with a monolayer of catalyst material in case of a low surface catalyst a much lower catalyst loading will be required. In this case of monolayer coverage, the soot particles deposited should always have a chance to come into contact with catalyst particles as the whole surface is occupied with a monolayer of catalyst material.

Therefore, a big increase in activity of copper-only containing catalysts was achieved, both at low temperatures and at 600°C using quite moderate copper oxide loading of uncoated SiC, while it required very high copper oxide loading up to 20% to get good results on alumina-coated SiC. This opens the way to decrease the cost of catalyzed DPF due to the elimination of washcoat and additional operations of its deposition namely drying and calcinations and further due to lower catalyst loadings.

Further improvement in activity of copper-containing catalysts in soot oxidation by addition of a second metal oxide was not achieved - as a rule the activity decreased. In contrast to that a combination of copper oxide catalyst with silver greatly improved catalyst performance, especially at lower temperatures. Such a catalyst consisting of copper oxide and silver in metallic form showed good synergy between these two elements, as can be seen in Table 1:

| Catalyst | $T_{25}$ % | % Soot conv. below 600°C | Time [min] 50% conv. at 600°C | Time [min] 90% conv. at 600°C | Ratio CO/ $CO_2$ |
|---|---|---|---|---|---|
| Diesel soot + SiC - without catalyst | 600 | 17.5 | 8.8 | 45.1 | 0.59 |
| 20%$Co_3O_4$ /20%$Al_2O_3$/SiC | 579 | 32.9 | 5.8 | 32.5 | 0.11 |
| 20%$Fe_2O_3$/ 20%$Al_2O_3$/SiC | 583 | 32.6 | 7.2 | 36.4 | 0.18 |
| 20%$MnO_x$/ 20%$Al_2O_3$/SiC | 572 | 37.9 | 4.3 | 30.3 | 0.12 |

(continued)

| Catalyst | $T_{25}$ % | % Soot conv. below 600°C | Time [min] 50% conv. at 600°C | Time [min] 90% conv. at 600°C | Ratio CO/ CO$_2$ |
|---|---|---|---|---|---|
| 20%CuO/20% Al$_2$O$_3$/SiC | 576 | 40.0 | 1.5 | 16.5 | 0.10 |
| 10%Cr/20% Al$_2$O$_3$/SiC | 554 | 49.9 | 0.0 | 21.5 | 0.15 |
| 10% Ag/20% Al$_2$O$_3$/SiC | 561 | 45.6 | 0.9 | 16.1 | 0.12 |
| 10%CuO/20% Al$_2$O$_3$/SiC | 579 | 33.6 | 4.7 | 25.6 | 0.10 |
| 20%CuO/SiC | 553 | 60.1 | -1.7* | 5.7 | 0.15 |
| 6%CuO/SiC | 580 | 56.7 | -1.2* | 9.9 | 0.32 |
| 4%CuO/SiC | 581 | 47.9 | -2.5* | 8.9 | 0.33 |
| 4%CuO/cord | 593 | 34.7 | 2.2 | 10.7 | 0.17 |
| 6%CuO/cord | 581 | 47.9 | 0.5 | 9.8 | 0.16 |
| 3%CuO/cord | 590 | 42.1 | 1.0 | 8.3 | 0.16 |
| 2% Ag/cord | | 59.1 | -1.8* | 11.7 | 0.16 |
| 5%CuO/cord | 571 | 44.1 | 0.9 | 12.0 | 0.18 |
| 5%Ag/cord | 568 | 40.9 | 1.9 | 17.4 | 0.25 |
| 10%Ag/SiC | 555 | 45.6 | 0.9 | 16.1 | 0.12 |
| 4%Ag /4%CuO /SiC | 562 | 72.0 | -3.5* | 2.8 | 0.24 |
| 3%Ag-3%CuO /cord | 565 | 62.2 | -2.5* | 3.0 | 0.21 |
| 1% Ag -4%CuO /SiC | 559 | 69.1 | -2.5* | 3.0 | n/a |
| 2%Ag-4%CuO/ cord | 556 | 66.7 | -2.1* | 3.4 | n/a |
| 3% Ag 4%CuO /cord | 556 | 65.0 | -2.3* | 4.8 | n/a |
| 5%Ag 8%CuO/ cord | 554 | 71.7 | -3.0* | 2.8 | 0.20 |
| 2%Ag-2%CuO/ cord | 565 | 62.4 | -1.9* | 4.7 | 0.23 |
| 3%Ag-2%CuO/ cord | 558 | 62.5 | -1.8* | 7.3 | 0.24 |
| 4%CuO 1st+2%Ag 2nd/ cord | 546 | 75.7 | -3.6* | 2.6 | n/a |

Table 1 (previous page): Activity of different catalysts deposited on SiC and cordierite (cord) in soot oxidation using 8% O$_2$ in He mixture. Reaction mixture of 8% O$_2$ in He, ramp 9°C/min; 240 mg catalyst, 40 mg soot. All catalysts were preliminary calcined at 850°C for 2h. *- means that 50% soot conversion was reached before 600°C, and this is a time in minutes of reaching 50% soot conversion before 600 °C:

The catalyst compositions given in table 1 reflect the weight % of the component relative the weight of filter material. As an example, 2% Ag -4%CuO meaning 2wt % of silver and 4wt% of copper oxide regarding the weight of filter powder.

The best catalysts from Ag-CuO series can reach 70-75% of soot conversion before 600°C and quickly within 2-3 minutes oxidized practically all soot available at 600°C.

The best result was obtained when copper oxide was deposited first from copper nitrate, then dried and calcinated with the following deposition of silver from silver nitrate, as can be seen for the last example presented in table 1. The reason of such synergy between silver and copper oxide is unknown at the moment, probably copper is supplying oxygen to silver, while partially reduced copper oxide can quickly capture oxygen from the gas phase. XRD analysis revealed only formation of silver and copper oxide. However; XRD analysis has been done at room temperature and the situation can be different at elevated temperatures near 600 °C, where some alloying was observed. Therefore, all compositions described and claimed herein refer to the composition and oxidation state at room temperature (25 °C).

Preparation of full-size DPFs:

For the preparation of full-size DPFs coated with Ag-CuO catalyst, the same method of impregnation was used as for the powder samples. The uncoated Diesel particular filters were impregnated first with solutions containing copper nitrate and citric acid and after drying, only part of the filter was repeatedly impregnated with a solution containing silver and copper nitrates with following drying and calcinations at very high temperature of 900°C to provide high-temperature stability of the catalyst. In principle, although the whole filter can be impregnated with silver, but for silver-saving and thus cost-saving reasons, only the inlet area (1/4 to 1/5) of the filter was covered with Ag. So the silver is located only in the front zone of the inlet channels to facilitate soot ignition at low temperatures in synergy with copper oxide, while the rest of the filter surface is covered only with copper oxide to propagate soot ignition. As a result, the total silver loading can be held very low, for example only 10g per DPF (for a 2.0L common rail diesel engine) made from cordierite and 8g for DPF made from SiC (silicon carbide) are sufficient.

Best results for DPFs of the presented invention are obtained, when the filter material is prepared without preliminary washcoating with high-surface-area refractory materials, especially oxides like alumina, in contrast to commercial samples, where deposition of alumina is the first and very important step in preparation.

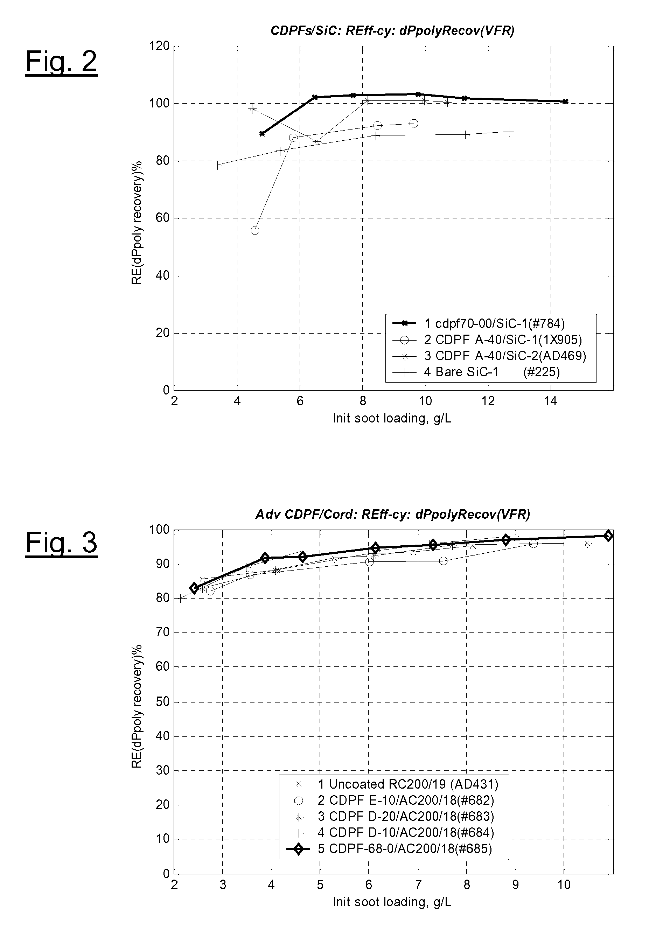

In Figures 2 and 3, the average regeneration efficiencies estimated from the recovery of backpressure are shown over all Drop-To-Idle (DTIR) regenerations performed for given samples (Examples 2a and b) and reference samples (Examples 1). Regeneration efficiencies for standard CDPFs are between 80 and 100 %, and are appropriate, while there is no complete recovery for uncatalyzed DPF. Ag-CuO catalyst prepared on SiC has a better or at least comparable performance in comparison with commercial Pt-containing prototypes as can be seen from these figures.

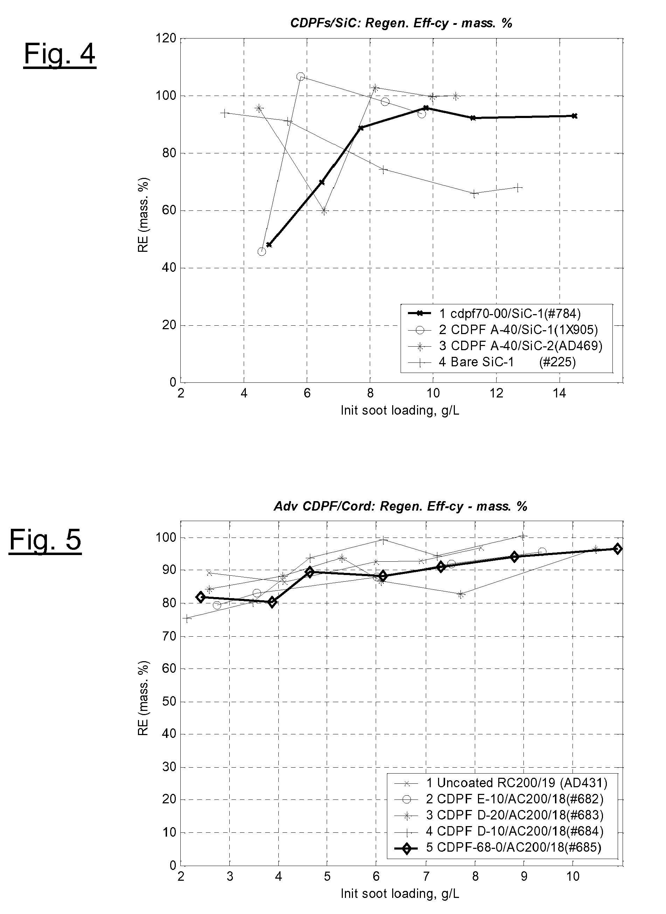

In Figures 4 and 5 the regeneration efficiencies were evaluated using mass conversion taking into account the weight difference before and after regeneration. For low soot loadings, the picture is complex due to the lower accuracy than for the dP method, taking into account the very small amount of soot loaded and the high total weight of the filter meaning that the small difference in weighting conditions can be crucial for accuracy. For high soot loadings, the performance of the inventive Ag-CuO catalyst presented here on different substrates, namely SiC and Cordierite, was comparable with Pt-containing DPFs.

For non-catalyzed DPFs, the regeneration efficiencies were lower, mainly from 70 to 90%. Soot conversion was measured by weighing the filter before and after regeneration. Generally, the regeneration efficiency determined by both methods revealed better or comparable performance of Ag-CuO catalysts in relation to commercial Pt-containing prototypes.

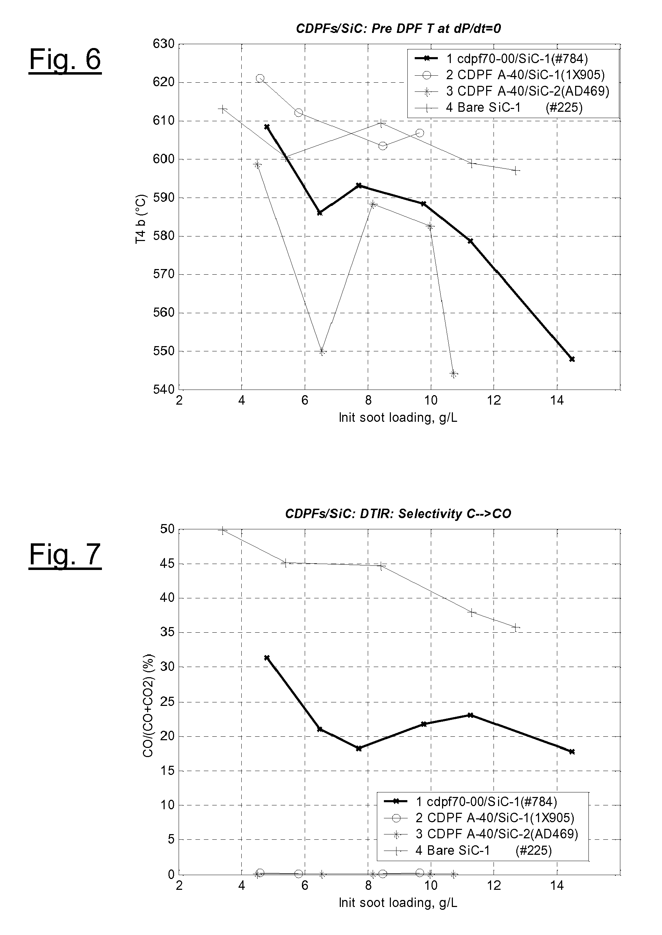

Another important characteristic value of soot oxidation is the balance pressure drop temperature, which means the temperature at which no further increase of pressure drop can be found, e.g. dP /dT=0. At this point, the decrease of dP by soot combustion compensates the increase of dP due to the increase of temperature and space velocity. The lower balance pressure drop temperature indicates the higher activity in soot oxidation at lower temperatures or more effective soot oxidation ignition. The pressure drop balance temperature is shown in Figure 6. The balance point temperature for Ag-CuO catalyst was better than for the bare filter and one of the Pt-containing DPFs and generally comparable with other Pt-based DPFs. From this point of view, the catalyst of the present invention revealed better or comparable soot ignition behavior than commercial Pt-containing prototypes. This is despite the fact that the mechanism of soot oxidation is different on this catalyst than on Pt-containing DPFs.

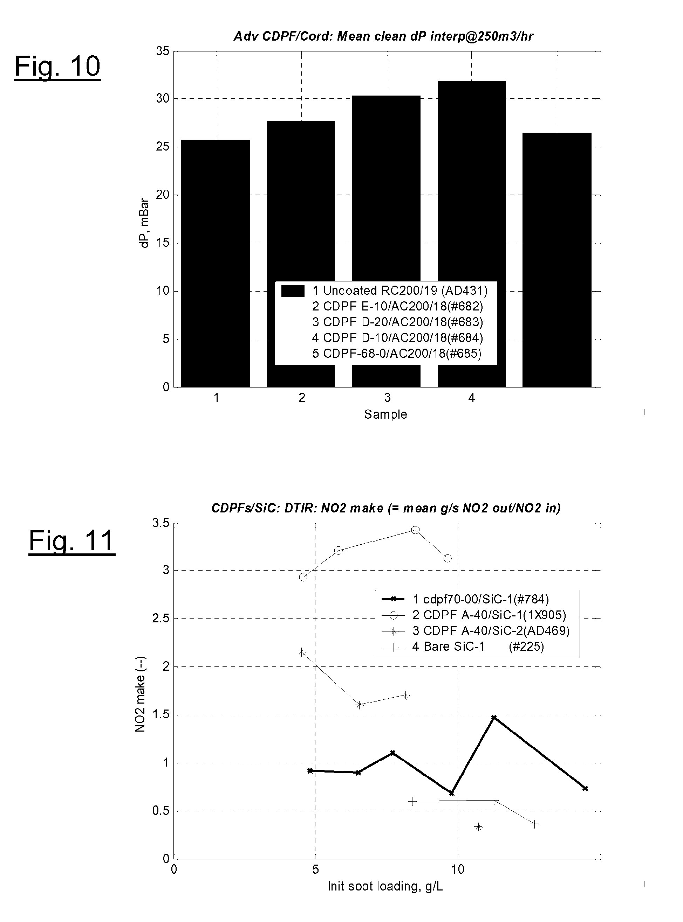

As Figure 7 shows, the Pt-based DPFs are very active in CO oxidation and as commonly known also for HC oxidations. Such oxidation leads to huge amounts of heat release, because soot oxidation according to $2C+ O_2 \rightarrow 2CO$ produces an amount of heat which is nearly 3 times lower than for CO oxidation to $CO_2$: $2CO + O_2 \rightarrow 2CO_2$. The oxidation of hydrocarbons is also producing additional energy release. That leads to violent soot combustion on Pt-based DPFs with extremely high peak temperatures and providing unsafe regeneration which might destroy the DPF and leads to formation of cracks and holes in the DPF. A typical picture is presented in Figures 8 and 9. Whilst the catalyst of the present invention Ag-CuO has revealed peak temperatures close to bare uncoated DPF, the peak temperatures for Pt-catalyzed commercial prototypes were significantly higher at the same or close soot loading. As a result, considering temperature of 1100 °C as a limit for safe regeneration, one can see that possible soot loading can be 2-3g soot/l higher for the catalyst of the present invention than for Pt-based DPFs. Figure 10 is illustrating that this method of preparation without preliminary washcoating with alumina is producing minimal increase of backpressure for DPFs with a dP close to a bare filter, while commercial coating is increasing the backpressure which leads to an additional fuel penalty.

Figure 11 is presenting average NO$_2$ emissions during DPF regeneration. The figure shows that Pt-containing DPFs produce much more NO$_2$ than bare filter, while the catalysts of present invention show just a small increase of NO$_2$ regarding to bare filter. This is because Pt is very active in NO oxidation which leads to undesirable NO$_2$ emissions. These results show that the target for NO$_2$ emissions during regenerations cannot be met by standard CDPF catalysts, and the use of such CDPFs will lead to an increase of NO$_2$ emissions in comparison with non-catalyzed (DPF) and fuel-additive (ADPF) technologies, whereas such problem does not exist for the Ag-CuO catalyst of the present invention.

Regeneration efficiencies were between 80 and 100 % mass, and generally higher or comparable than for commercial Pt-containing catalyzed DPFs. Such Ag-CuO formulations are attractive from practical point of view due to lower costs, high regeneration efficiency, higher possible maximal soot loading amount, more safe regeneration and the lower NO$_2$ emissions during DPF regenerations regarding current commercial Pt-containing prototypes. In addition the method of preparation without preliminary washcoat with alumina or other refractory oxide creates the minimal increase of backpressure and allows decreasing of costs.

**Claims**

1. A catalyst material for assisting carbon-containing particulate matter combustion which is essentially free of platinum group metal compounds consisting essentially of a copper oxide and silver whereas the silver to copper oxide ratio in weight is from 1:5 to 3:1.

2. A catalyst according to claim 1,
   **characterized in that**
   the silver to copper oxide ratio in weight is from 1:3 to 2:1, preferably about 1:2.

3. A catalyst for assisting carbon-containing particulate matter combustion consisting essentially of a copper oxide and silver which can be prepared by a process comprising the steps of

   a) first impregnating the surface of a carrier material with an aqueous solution of a copper salt followed by drying and
   b) in a second step impregnating the copper-salt impregnated carrier material of a) with an aqueous solution of a silver salt followed by drying and
   c) calcination at a temperature > 700°C, preferably ≥ 900°C

4. A catalyst according to claim 3
   **characterized in that**
   the carrier material is selected from SiC and cordierite and that the carrier material is not coated preliminary with a high-surface-area refractory material.

5. A catalyst according to claim 3 or 4
   **characterized in that**
   the solution used in step b) further comprises a copper salt.

6. A catalyst according to one of the claims 3 to 5
   **characterized in that**
   the silver to copper oxide ratio in weight is from 1:5 to 3:1, preferably from 1:3 to 2:1 and most preferably about 1:2.

7. Use of a catalyst according to one of the preceding claims for assisting carbon-containing particulate matter combustion, especially of diesel engine exhaust gases.

8. Use of a catalyst according to one of the preceding claims for the catalytic coating of a Diesel particulate filter.

9. A particulate filter for filtering out solid particles present in the exhaust gases of an internal combustion engine, comprising a catalyst which is essentially free of platinum group metals,

**characterized in that**

the catalyst is a catalyst according to one of claims 1 to 6.

10. A particulate filter according to claim 9,
    **characterized in that**
    the silver loading is 1 - 5 wt% and copper oxide loading 1 - 8% of the filter weight, preferably 2 wt% Ag and 4 wt% CuO.

11. A particulate filter according to claim 9 or 10,
    **characterized in that**
    5 to 50%, preferably 10 to 30%, of the active surface of the filter contains a catalyst according to one of claims 1 to 6 and that the active surface of the filter contains at least one further catalyst, preferably copper oxide (CuO).

12. A particulate filter according to claim 11
    **characterized in that**
    the catalyst according to one of claims 1 to 6 is located at the beginning of inlet channels of the filter.

## Fig. 1

Legend:
- N78 Ag1%-Cu4%
- N90 5% Ag/ cord.
- N60 4% Cu/cord
- N59 8% CuO/cord
- N96 4%Cu(1st)-2%Ag(2d) 600°C
- N106 4%Ag-4%Cu

X-axis: Temperature /°C
Y-axis: Weight norm. / -

Fig. 2

CDPFs/SiC: REff-cy: dPpolyRecov(VFR)

1 cdpf70-00/SiC-1(#784)
2 CDPF A-40/SiC-1(1X905)
3 CDPF A-40/SiC-2(AD469)
4 Bare SiC-1       (#225)

Fig. 3

Adv CDPF/Cord: REff-cy: dPpolyRecov(VFR)

1 Uncoated RC200/19 (AD431)
2 CDPF E-10/AC200/18(#682)
3 CDPF D-20/AC200/18(#683)
4 CDPF D-10/AC200/18(#684)
5 CDPF-68-0/AC200/18(#685)

## Fig. 4

**CDPFs/SiC: Regen. Eff-cy - mass. %**

Legend:
- 1 cdpf70-00/SiC-1(#784)
- 2 CDPF A-40/SiC-1(1X905)
- 3 CDPF A-40/SiC-2(AD469)
- 4 Bare SiC-1 (#225)

## Fig. 5

**Adv CDPF/Cord: Regen. Eff-cy - mass. %**

Legend:
- 1 Uncoated RC200/19 (AD431)
- 2 CDPF E-10/AC200/18(#682)
- 3 CDPF D-20/AC200/18(#683)
- 4 CDPF D-10/AC200/18(#684)
- 5 CDPF-68-0/AC200/18(#685)

Fig. 6

**CDPFs/SiC: Pre DPF T at dP/dt=0**

Fig. 7

**CDPFs/SiC: DTIR: Selectivity C-->CO**

**Fig. 8**

CDPFs/SiC: DTIR: Max. T within DPF

Legend:
- 1 cdpf70-00/SiC-1(#784)
- 2 CDPF A-40/SiC-1(1X905)
- 3 CDPF A-40/SiC-2(AD469)
- 4 Bare SiC-1 (#225)

**Fig. 9**

Adv CDPF/Cord: DTIR: Max. T within DPF

Legend:
- 1 Uncoated RC200/19 (AD431)
- 2 CDPF E-10/AC200/18(#682)
- 3 CDPF D-20/AC200/18(#683)
- 4 CDPF D-10/AC200/18(#684)
- 5 CDPF-68-0/AC200/18(#685)

## Fig. 10

**Adv CDPF/Cord: Mean clean dP interp@250m3/hr**

Legend:
- 1 Uncoated RC200/19 (AD431)
- 2 CDPF E-10/AC200/18(#682)
- 3 CDPF D-20/AC200/18(#683)
- 4 CDPF D-10/AC200/18(#684)
- 5 CDPF-68-0/AC200/18(#685)

Y-axis: dP, mBar
X-axis: Sample

## Fig. 11

**CDPFs/SiC: DTIR: NO2 make (= mean g/s NO2 out/NO2 in)**

Legend:
- 1 cdpf70-00/SiC-1(#784)
- 2 CDPF A-40/SiC-1(1X905)
- 3 CDPF A-40/SiC-2(AD469)
- 4 Bare SiC-1 (#225)

Y-axis: NO2 make (–)
X-axis: Init soot loading, g/L

**European Patent Office**

**EUROPEAN SEARCH REPORT**

Application Number

EP 08 10 3427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 378 289 A (FORD GLOBAL TECHNOLOGIES LLC A [US]) 7 January 2004 (2004-01-07) * claims 1,3; examples CPF,11,15,18 * ----- | 1,2,7-9, 11,12 | INV. B01D53/94 B01J23/89 B01J35/04 B01J37/02 |
| X | EP 1 541 219 A (FORD GLOBAL TECHNOLOGIES LLC A [US]) 15 June 2005 (2005-06-15) * paragraph [0035]; claims 2,3,7,14,15; tables 1,2 * ----- | 1,2,7-12 | |
| X | DE 196 53 200 A1 (BASF AG [DE]; DAIMLER BENZ AG [DE]) 25 June 1998 (1998-06-25) * example 1 * ----- | 1-3,6 | |
| X | GB 2 236 493 A (RIKEN KK [JP]) 10 April 1991 (1991-04-10) * page 2, lines 10-19; claims 1,8,9; examples 3,4 * ----- | 3,4,8,9 | |
| A | US 5 670 444 A (YOSHIDA KIYOHIDE [JP] ET AL) 23 September 1997 (1997-09-23) * the whole document * ----- | 1,2,6-10 | |
| A | US 5 658 543 A (YOSHIDA KIYOHIDE [JP] ET AL) 19 August 1997 (1997-08-19) * the whole document * ----- | 1-10 | TECHNICAL FIELDS SEARCHED (IPC) B01D B01J |
| A | GB 866 337 A (NAPIER & SON LTD) 26 April 1961 (1961-04-26) * claims 1,2 * ----- | 1,2 | |

The present search report has been drawn up for all claims

| Place of search | Date of completion of the search | Examiner |
|---|---|---|
| The Hague | 7 August 2008 | Mattheis, Chris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 10 3427

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2008

| Patent document cited in search report | | Publication date | Patent family member(s) | | Publication date |
|---|---|---|---|---|---|
| EP 1378289 | A | 07-01-2004 | EP<br>EP<br>JP<br>US<br>US | 1356864 A1<br>1378288 A2<br>2004042021 A<br>2006100097 A1<br>2004018939 A1 | 29-10-2003<br>07-01-2004<br>12-02-2004<br>11-05-2006<br>29-01-2004 |
| EP 1541219 | A | 15-06-2005 | NONE | | |
| DE 19653200 | A1 | 25-06-1998 | BR<br>CN<br>WO<br>EP<br>ES<br>JP<br>KR<br>US | 9714044 A<br>1245444 A<br>9826858 A1<br>0951341 A1<br>2159896 T3<br>2001506180 T<br>20000057669 A<br>6153162 A | 09-05-2000<br>23-02-2000<br>25-06-1998<br>27-10-1999<br>16-10-2001<br>15-05-2001<br>25-09-2000<br>28-11-2000 |
| GB 2236493 | A | 10-04-1991 | DE<br>JP<br>JP | 4031385 A1<br>2863567 B2<br>3118811 A | 11-04-1991<br>03-03-1999<br>21-05-1991 |
| US 5670444 | A | 23-09-1997 | NONE | | |
| US 5658543 | A | 19-08-1997 | US | 5589432 A | 31-12-1996 |
| GB 866337 | A | 26-04-1961 | DE<br>FR | 1067789 B<br>1203413 A | 29-10-1959<br>18-01-1960 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11253757 B
- WO 0029726 A
- EP 0160482 A

**Non-patent literature cited in the description**

- *Platinum Metals Review,* 2001, vol. 45 (1), 30
- **OI-UCHISAVA J. ; OBUCHI A. ; ENOMOTO R. ; LIU S. ; NANBA T. ; KUSHIYAMA S.** *Appl.Catal., B,* 2000, vol. 26 (1), 17-24
- **OI-UCHISAVA J. ; OBUCHI A. ; OGATA A. ; ENOMOTO R. ; KUSHIYAMA S.** *Appl.Catal.B,* 1999, vol. 21 (1), 9-17